(19) **Europäisches Patentamt / European Patent Office / Office européen des brevets**

(11) **EP 4 502 190 A1**

(12) **EUROPEAN PATENT APPLICATION**
published in accordance with Art. 153(4) EPC

(43) Date of publication:
05.02.2025 Bulletin 2025/06

(21) Application number: 23780349.9

(22) Date of filing: 27.03.2023

(51) International Patent Classification (IPC):
*C21D 8/12* (2006.01)  *C22C 38/00* (2006.01)
*H01F 1/147* (2006.01)

(52) Cooperative Patent Classification (CPC):
C21D 8/12; C22C 38/00; H01F 1/147

(86) International application number:
PCT/JP2023/012197

(87) International publication number:
WO 2023/190339 (05.10.2023 Gazette 2023/40)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.03.2022 JP 2022052343

(71) Applicant: **NIPPON STEEL CORPORATION**
**Chiyoda-ku**
**Tokyo 100-8071 (JP)**

(72) Inventor: **KAWAMURA Yusuke**
**Tokyo 100-8071 (JP)**

(74) Representative: **Vossius & Partner**
**Patentanwälte Rechtsanwälte mbB**
**Siebertstrasse 3**
**81675 München (DE)**

(54) **GRAIN-ORIENTED ELECTROMAGNETIC STEEL SHEET AND METHOD FOR PRODUCING SAME**

(57) In the grain-oriented electrical steel sheet according to an aspect of the present invention, a magnetic domain refinement treatment line, which is a part on which a magnetic domain refinement treatment is performed, exists in a magnetic domain control treatment lines which form an angle of 0° to 45° with respect to an orthogonal-to-rolling direction and are arranged in a rolling direction. It is preferable that the average magnetic domain width in an area, in which the magnetic domain refinement treatment line does not exist among the magnetic domain control treatment lines, and of which the length is 1 mm or more, is 500 $\mu$m or less. Alternatively it is preferable that the average magnetic domain width in an area, in which the magnetic domain refinement treatment line does not exist among the magnetic domain control treatment lines, and which includes two or more of magnetic walls, is 500 $\mu$m or less.

FIG. 9

EP 4 502 190 A1

**Description**

Technical Field of the Invention

The present disclosure relates to a grain-oriented electrical steel sheet and a manufacturing method therefore.

The present application claims priority based on Japanese Patent Application No. 2022 052343 filed in Japan on March 28, 2022, the contents of which are incorporated herein by reference.

Related Art

A grain-oriented electrical steel sheet is a steel sheet containing 7% by mass or less of Si and having a secondary recrystallization texture in which secondary recrystallized grains are accumulated in the { 110}<001> orientation (Goss orientation). The grain-oriented electrical steel sheet is mainly used as a core of an electric power transformer, and there is an increasing need for reduction of noise in addition to reduction of energy loss (iron loss).

For reduction in iron loss, there has been known a magnetic domain refinement technique for reducing a magnetic domain width by irradiating a surface of a grain-oriented electrical steel sheet with a laser or an electron beam in a direction intersecting a rolling direction. In recent years, in order to provide a grain-oriented electrical steel sheet having good iron loss characteristics, various improved techniques related to magnetic domain refinement have been proposed (see, for example, Patent Documents 1 to 3.).

Citation List

Patent Document

Patent Document 1: Japanese Unexamined Patent Application, First Publication No. 2012-57219
Patent Document 2: Japanese Unexamined Patent Application, First Publication No. 2012-12664
Patent Document 3: Japanese Unexamined Patent Application, First Publication No. 2012-57218

Summary of Invention

Problems to be Solved by the Invention

However, when the grain-oriented electrical steel sheet is subjected to the magnetic domain refinement treatment, there arises a problem that the magnetostriction characteristic changes due to the reflux magnetic domain and the noise of the transformer increases. As described above, since there is a trade-off relationship between the reduction in iron loss and the reduction in noise of the grain-oriented electrical steel sheet, there is a demand for an optimal magnetic domain refinement technique that can achieve both of them.

In view of the above-described problems, an object of the present disclosure is to provide a grain-oriented electrical steel sheet capable of achieving both iron loss reduction and noise reduction, and a manufacturing method therefore.

Means for Solving the Problem

(1) In the grain-oriented electrical steel sheet according to one embodiment of the present invention, a magnetic domain refinement treatment line, which is a part on which a magnetic domain refinement treatment is performed, exists in a magnetic domain control treatment lines which form an angle of 0° to 45° with respect to an orthogonal-to-rolling direction and are arranged in a rolling direction.
(2) Preferably, in the grain-oriented electrical steel sheet according to (1), the average magnetic domain width in an area, in which the magnetic domain refinement treatment line does not exist among the magnetic domain control treatment lines, and of which the length is 1 mm or more, is 500 $\mu$m or less.
(3) Preferably, in the grain-oriented electrical steel sheet according to (1) or (2), the average magnetic domain width in an area, in which the magnetic domain refinement treatment line does not exist among the magnetic domain control treatment lines, and which includes two or more of magnetic walls, is 500 $\mu$m or less.
(4) Preferably, in the grain-oriented electrical steel sheet according to any one of (1) to (3), the magnetic domain refinement treatment lines exist in a non-single period.

(5) Preferably, in the grain-oriented electrical steel sheet according to any one of (1) to (4), the ratio of the magnetic domain refinement treatment line with respect to the total extension of the magnetic domain control treatment lines is 10% or more and 90% or less.

(6) Preferably, in the grain-oriented electrical steel sheet according to any one of (1) to (5), the magnetic domain refinement treatment line is a groove.

(7) Preferably, in the grain-oriented electrical steel sheet according to any one of (1) to (5), the magnetic domain refinement treatment line is a thermal strain.

(8) The method for manufacturing a grain-oriented electrical steel sheet according to one embodiment of the present invention includes: acquiring a magnetic domain image of a grain-oriented electrical steel sheet; determining, based on a spatial distribution of a magnetic domain width of the magnetic domain image, a point to which a magnetic domain refinement treatment is applied among magnetic domain control treatment lines which forms an angle of 0° to 45° with respect to an orthogonal-to-rolling direction of the grain-oriented electrical steel sheet and are arranged in a rolling direction; and performing the magnetic domain control treatment on the point determined during the determining among the magnetic domain control treatment line.

(9) Preferably, in the method for manufacturing a grain-oriented electrical steel sheet according to (8), in the determining, a point at which the magnetic domain width is equal to or more than a predetermined value is determined as a point to which the magnetic domain control treatment is applied.

(10) Preferably in the method for manufacturing a grain-oriented electrical steel sheet according to (8) or (9), in the determining, a spatial distribution of the magnetic domain width is derived from the magnetic domain image by using two-dimensional Fourier transform.

(11) Preferably, in the method for manufacturing a grain-oriented electrical steel sheet according to any one of (8) to (10), during performing the magnetic domain control treatment, the magnetic domain control treatment is performed by a laser irradiation or an electron beam irradiation.

(12) Preferably, in the method for manufacturing a grain-oriented electrical steel sheet according to any one of (9) to (11), the predetermined value is within a range of 400 $\mu$m to 600 $\mu$m.

Effects of the Invention

According to the grain-oriented electrical steel sheet according to the embodiment of the present invention, it is possible to achieve both iron loss reduction and noise reduction.

According to the method for manufacturing a grain-oriented electrical steel sheet according to the embodiment of the present invention, it is possible to provide a grain-oriented electrical steel sheet that achieves both a reduction in iron loss and a reduction in noise.

Brief Description of the Drawings

FIG. 1A is a graph showing an example of a spatial distribution of a magnetic domain width of a grain-oriented electrical steel sheet before a magnetic domain refinement treatment.

FIG. 1B is a graph showing an example of a spatial distribution of a magnetic domain width of a grain-oriented electrical steel sheet after a magnetic domain refinement treatment.

FIG. 1C is a graph showing regions where the magnetic domain width is refined by 50$\mu$m or more before and after the magnetic domain refinement shown in FIGS. 1A and 1B.

FIG. 2 is a graph showing a relationship between the magnetic domain width before laser irradiation and the magnetic domain width after laser irradiation.

FIG. 3 is a block diagram illustrating a hardware constitution of the image acquisition device according to the present embodiment.

FIG. 4 is a block diagram illustrating the hardware constitution of an analysis device according to the present embodiment.

FIG. 5 is a schematic view illustrating the constitution of a laser irradiation device according to the present embodiment.

FIG. 6 is a flowchart illustrating a method for manufacturing a grain-oriented electrical steel sheet according to the present embodiment.

FIG. 7 is a schematic view showing a method of cutting out a plurality of partial regions from a magnetic domain image of a grain-oriented electrical steel sheet.

FIG. 8 is an example of a plurality of partial Fourier images obtained by applying two-dimensional Fourier transform to each of a plurality of partial regions cut out from a magnetic domain image of a grain-oriented electrical steel sheet.
FIG. 9 is a schematic view illustrating a magnetic domain refinement treatment line which is an object of magnetic domain refinement among magnetic domain control treatment lines of a grain-oriented electrical steel sheet.
FIG. 10 is a schematic view of a magnetic domain image of a grain-oriented electrical steel sheet.

Embodiments of the Invention

Hereinafter, embodiments of the present invention are described with reference to the drawings.

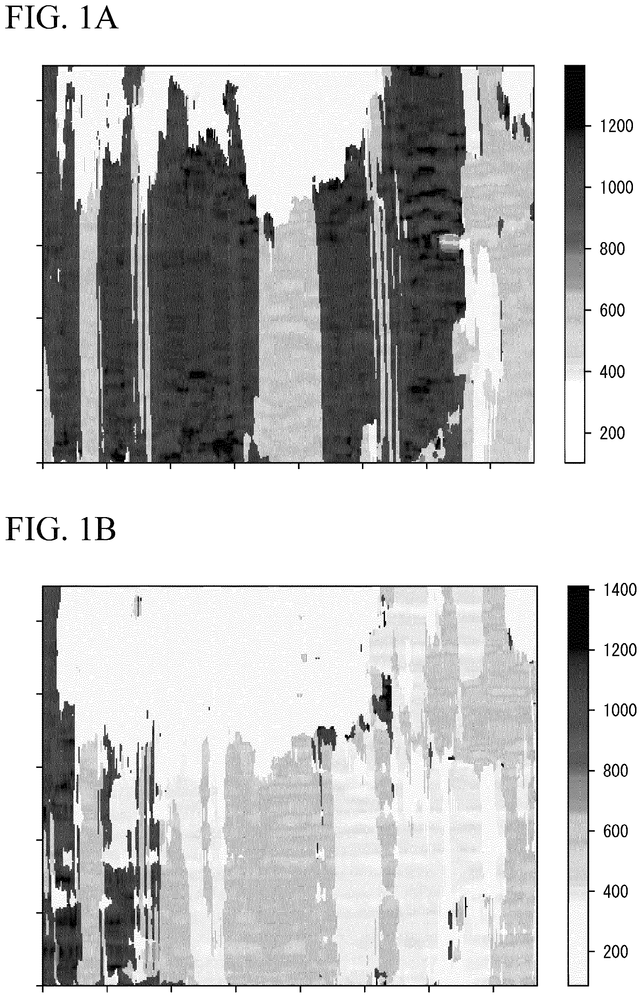

First, the magnetic domain structures of the grain-oriented electrical steel sheets before and after the magnetic domain refinement treatment are compared. FIG. 1A illustrates a spatial distribution of a width of a 180° magnetic domain of a grain-oriented electrical steel sheet (Hereinafter, it is simply referred to as a "magnetic domain width".) before a magnetic domain refinement treatment. FIG. 1B illustrates the spatial distribution of the magnetic domain width after the magnetic domain refinement treatment is performed on the surface of the grain-oriented electrical steel sheet in FIG. 1A. The magnetic domain refinement treatment here is performed by performing continuous wave laser irradiation along a magnetic domain control treatment line substantially perpendicular to the rolling direction (RD).

The "180° magnetic domain" refers to a magnetic domain in which the magnetization direction is the <100> orientation of the crystal and which is sandwiched between two 180° magnetic walls substantially parallel to the rolling direction. The "width" of the 180° magnetic domain refers to a distance between adjacent magnetic walls (magnetic wall interval).

The spatial distribution of the magnetic domain width shown in FIGS. 1A and 1B is derived from the magnetic domain image of the grain-oriented electrical steel sheet using a two-dimensional Fourier transform described later.

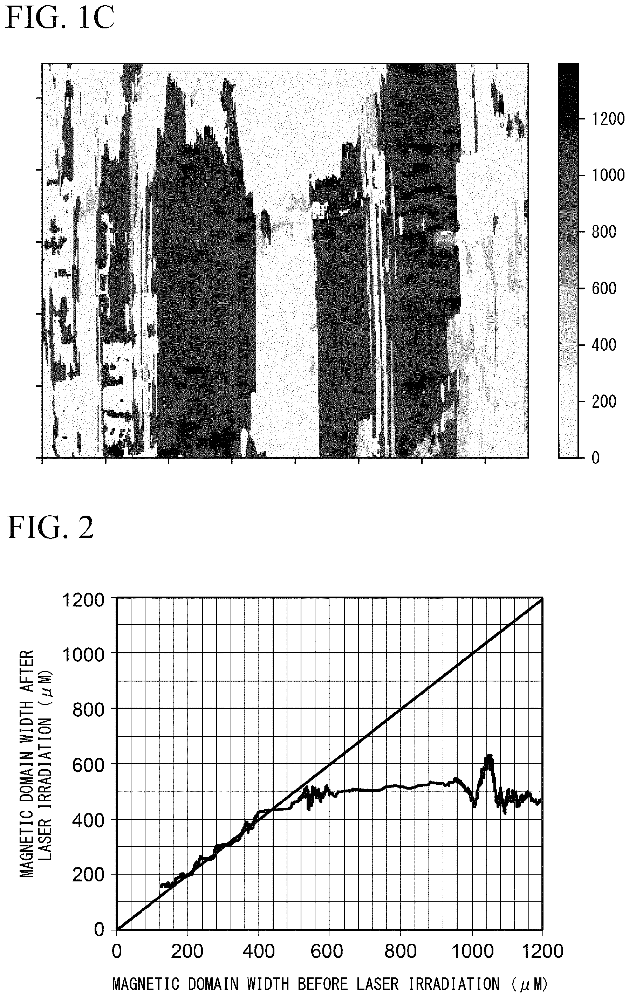

FIG. 1C illustrates regions where the magnetic domain width is refined by $50\,\mu m$ or more before and after the magnetic domain refinement shown in FIGS. 1A and 1B, and visualizes the value of an original magnetic domain width at which refinement occurs.

From FIG. 1C, it can be seen that the region where the effect of the magnetic domain refinement was $50\,\mu m$ or more is a region where the original magnetic domain width is wide, and in particular, the effect of the magnetic domain refinement remarkably appears in a region where the original magnetic domain width is about $500\,\mu m$ or more. That is, the effect of magnetic domain refinement varies depending on the original magnetic domain width.

FIG. 2 shows a relationship between the magnetic domain width before laser irradiation and the magnetic domain width after laser irradiation at the same position. As the irradiation conditions, the average irradiation energy density Ua $(mJ/mm^2)$ and the irradiation pitch PL (mm) were set to Ua = 1.5 $mJ/mm^2$ and PL = 4 mm, respectively.

As can be seen from FIG. 2, even if laser irradiation is applied to a region having a magnetic domain width of about $500\,\mu m$ or less, the effect of magnetic domain refinement does not appear.

From the above, it is considered that the effect of reducing the iron loss is obtained by magnetic domain refinement of a region having a large original magnetic domain width, and even if the magnetic domain refinement treatment is performed on a region having a small original magnetic domain width, the effect of reducing the iron loss cannot be obtained, leading to an increase in hysteresis loss and deterioration of noise characteristics.

Therefore, in the present embodiment, magnetic domain control is performed so as to preferentially perform the magnetic domain refinement treatment on the region having a large original magnetic domain width (for example, a region having an original magnetic domain width of $500\,\mu m$ or more) of the grain-oriented electrical steel sheet. Preferably, in the present embodiment, magnetic domain control is performed so as to perform the magnetic domain refinement treatment on only the region having a large original magnetic domain width (for example, a region having an original magnetic domain width of $500\,\mu m$ or more) of the grain-oriented electrical steel sheet. However, in view of operating accuracy of a device for magnetic domain control or the like, a part of the magnetic domain refinement treatment line may be allowed to overlap with the region having small magnetic domain width.

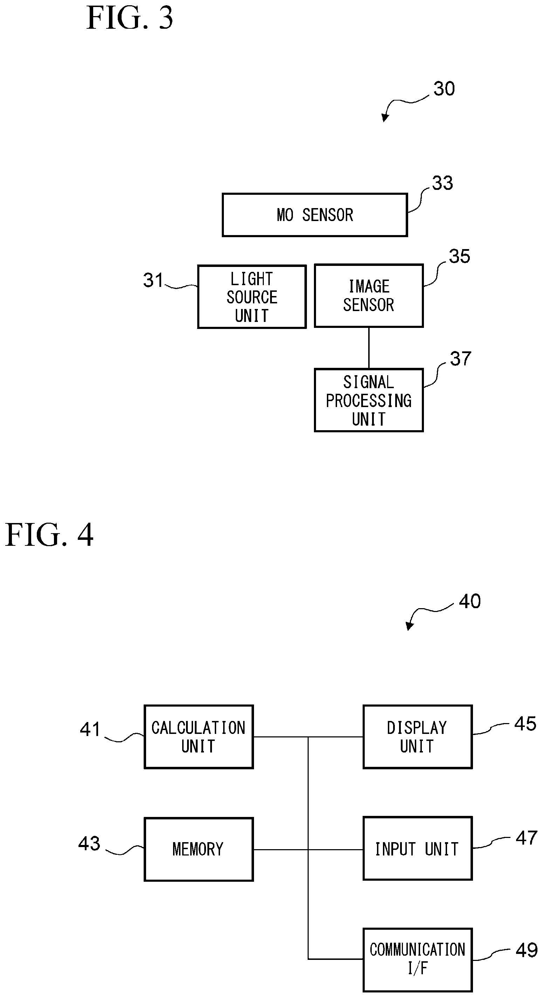

Next, a constitution of a device that realizes magnetic domain control of the grain-oriented electrical steel sheet according to the present embodiment is described with reference to FIGS. 3 to 5.

FIG. 3 illustrates a hardware constitution of the image acquisition device 30 that acquires a magnetic domain image of a grain-oriented electrical steel sheet. The image acquisition device 30 includes a light source unit 31, a magneto-optical (MO) sensor 33, an image sensor 35, and a signal processing unit 37.

The light source unit 31 includes a light source including a light emitting diode (LED), and irradiates the MO sensor 33 with light having a uniform polarization plane.

The MO sensor 33 is a device that measures a structure of a magnetic body, and has an observed section on which a magnetic sample to be measured is placed. The light emitted from the light source unit 31 passes through the inside of the MO sensor 33 and is reflected by the reflection layer, and the reflected light passes through the inside of the MO sensor 33 again and is output to the outside of the MO sensor 33. When the grain-oriented electrical steel sheet is placed as the magnetic body sample on the observed section of the MO sensor 33, a leakage magnetic field corresponding to the direction of spontaneous magnetization of the grain-oriented electrical steel sheet is generated inside the MO sensor 33, and the polarization plane of the reflected light is rotated by the leakage magnetic field.

The image sensor 35 is a Complementary Metal-Oxide-Semiconductor (CMOS) image sensor, forms an image of reflected light from the MO sensor 33 on a light receiving surface, performs photoelectric conversion, and an analog signal after photoelectric conversion is output to the signal processing unit 37. The spatial distribution of the leakage magnetic field can be obtained by detecting the reflected light in which the polarization plane is rotated by the image sensor 35, and the magnetic domain structure of the grain-oriented electrical steel sheet becomes clear.

The signal processing unit 37 includes an amplifier, an AD converter, a Digital Signal Processor (DSP), and the like. The analog signal output from the image sensor 35 is amplified by an amplifier and converted into a digital signal by an AD converter. The DSP performs predetermined digital processing on the digital signal to generate an image signal. The image signal generated by the signal processing unit 37 is output to the analysis device 40 (see FIG. 4) via a cable or by wireless communication.

FIG. 4 illustrates a hardware constitution of the analysis device 40 that analyzes the magnetic domain structure of the grain-oriented electrical steel sheet. The analysis device 40 is a computer device such as a personal computer (PC), and includes a calculation unit 41, a memory 43, a display unit 45, an input unit 47, and a communication I/F 49.

The calculation unit 41 includes a Central Processing Unit (CPU), analyzes a magnetic domain structure from a magnetic domain image of the grain-oriented electrical steel sheet according to a program stored in the memory 43, and determines a point to which the magnetic domain refinement treatment is applied. The processing executed by the calculation unit 41 is described in detail later.

The memory 43 includes a Read Only Memory (ROM) and a Random Access Memory (RAM). The ROM stores programs executed by the CPU of the calculation unit 41 and data required at the time of executing these programs. The program and data stored in the ROM are loaded into the RAM and executed.

Note that the memory 43 may include a magnetic memory such as a hard disk drive (HDD) or an optical memory such as an optical disk. Alternatively, the program or data may be stored in a computer-readable recording medium detachable from the analysis device 40. Alternatively, the program executed by the calculation unit 41 may be received from the network via the communication I/F 49.

The display unit 45 includes a display such as a liquid crystal display (LCD), a plasma display, or an organic electroluminescence (EL) display, displays an image on the basis of an image signal output from the image acquisition device 30, and displays an analysis result of the magnetic domain structure by the calculation unit 41.

The input unit 47 includes an input device such as a mouse or a keyboard. The communication I/F 49 is an interface for transmitting and receiving data to and from an external device via a network such as a Local Area Network (LAN), a Wide Area

Network (WAN), or the Internet.

Instead of general-purpose hardware such as a CPU, dedicated hardware specialized for analyzing a magnetic domain structure, such as an application specific integrated circuit (ASIC) or a Field Programmable Gate Array (FPGA), may be adopted as the calculation unit 41.

Note that FIGS. 3 and 4 illustrate a case where the image acquisition device 30 and the analysis device 40 are separate devices, but a system in which the image acquisition device 30 and the analysis device 40 are integrated may be adopted.

Known means such as laser irradiation, electron beam irradiation, and ion implantation can be adopted as means for performing the magnetic domain refinement treatment on the surface of the grain-oriented electrical steel sheet. Hereinafter, a constitution of a laser irradiation device that performs the magnetic domain refinement treatment by laser irradiation is described.

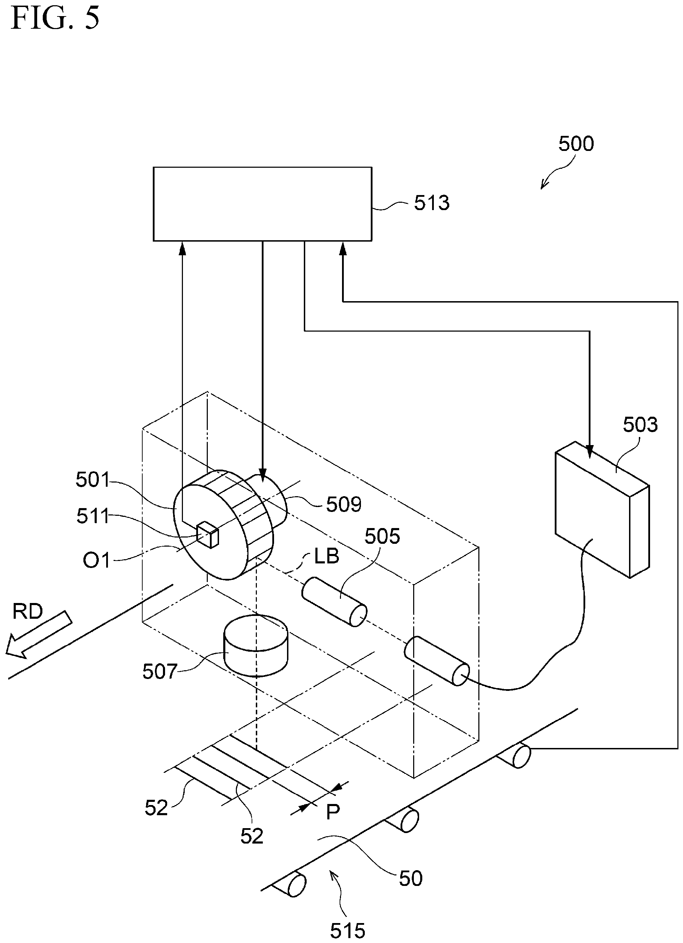

FIG. 5 illustrates a constitution of the laser irradiation device 500. The laser irradiation device 500 includes a polygon mirror 501, a light source device 503, a collimator 505, a condensing lens 507, a motor 509, a sensor 511, a control unit 513, and a sheet passing device 515.

The sheet passing device 515 passes the grain-oriented electrical steel sheet 50 in the rolling direction (RD).

The polygon mirror 501 has, for example, a regular polygonal prism shape, and a plurality of plane mirrors is provided on a plurality of side surfaces constituting the regular polygonal prism. The laser beam LB enters the plane mirror of the polygon mirror 501 from the light source device 503 via the collimator 505 in one direction (horizontal direction) and is reflected by the plane mirror.

The polygon mirror 501 is rotatable about the rotation axis O1 by driving from the motor 509. By sequentially changing the incident angle of the laser beam LB with respect to the plane mirror according to the rotation angle of the polygon mirror 501, the reflection direction of the laser beam LB is sequentially changed, and scanning can be performed along the magnetic domain control treatment line 52 of the grain-oriented electrical steel sheet 50. The magnetic domain control treatment line 52 forms an angle of 0° to 45° with respect to the orthogonal-to-rolling direction (TD) on the surface of the grain-oriented electrical steel sheet 50, and is a plurality of straight lines arranged in the rolling direction (RD).

Preferably, the plurality of magnetic domain control treatment lines 52 extend parallel to each other. Preferably, the plurality of magnetic domain control treatment lines 52 are arranged at equal intervals. The interval P between the adjacent magnetic domain control treatment lines 52 represents an irradiation pitch.

The light source device 503 outputs the laser beam LB by a predetermined irradiation system (for example, a continuous irradiation system or a pulse irradiation system) under the control of the control unit 513.

The condensing lens 507 is provided on the optical path of the laser beam LB reflected from the polygon mirror 501, and constitutes a condensing optical system having a predetermined focal length. When the laser beam LB reflected from the polygon mirror 501 is condensed on the surface of the grain-oriented electrical steel sheet 50 via the condensing lens 507, a groove is formed or thermal strain is introduced along the magnetic domain control treatment line 52 on the surface of the grain-oriented electrical steel sheet 50.

The motor 509 is coupled to the polygon mirror 501, and rotationally drives the polygon mirror 501 under the control of the control unit 513.

The sensor 511 is connected to a drive shaft of the motor 509, detects a rotation angle of the polygon mirror 501 rotated by the motor 509, and outputs a signal indicating the detected rotation angle (Hereinafter, the rotation angle signal is referred to as a rotation angle signal.) to the control unit 513.

The control unit 513 includes a processor and is connected to the light source device 503, the motor 509, the sensor 511, and the sheet passing device 515. The control unit 513 receives an input of a speed signal from the sheet passing device 515, and outputs a signal instructing the motor 509 to rotationally drive the polygon mirror 501.

In addition, the control unit 513 controls on and off of the power of the laser beam LB output from the light source device 503 on the basis of a magnetic domain refinement signal indicating a point to which magnetic domain refinement treatment is applied in the magnetic domain control treatment line 52 and a rotation angle signal output from the sensor 511. When the laser irradiation device 500 is electrically connected to the analysis device 40, the magnetic domain refinement signal is input from the analysis device 40 to the laser irradiation device 500. The magnetic domain refinement signal may be input to the laser irradiation device 500 by an operator.

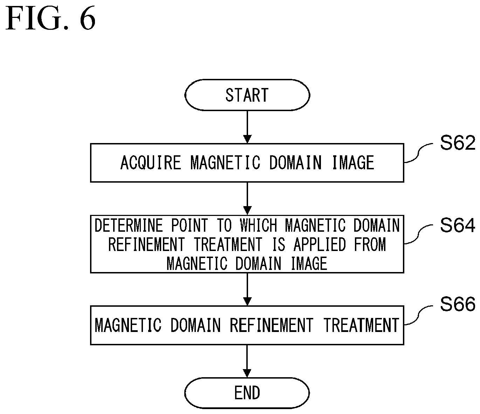

Next, a method for manufacturing the grain-oriented electrical steel sheet 50 according to the present embodiment is described with reference to FIG. 6.

First, the image acquisition device 30 is used to acquire a magnetic domain image of the grain-oriented electrical steel sheet 50 (step S62). Next, the calculation unit 41 of the analysis device 40 derives the spatial distribution of the width (magnetic domain width) of the 180° magnetic domain from the magnetic domain image, and determines the point where the magnetic domain width is greater than or equal to a predetermined value (for example, about 500 $\mu$m or more) in the magnetic domain control treatment line 52 of the grain-oriented electrical steel sheet 50, as the point to which the magnetic domain refinement treatment is applied (step S64).

In the present embodiment, a point to which magnetic domain refinement treatment is applied in the magnetic domain control treatment line 52 is referred to as a "magnetic domain refinement treatment line". Details of the processing of the step S64 executed by the calculation unit 41 is described later.

In the step S64, the point of the magnetic domain refinement treatment line may be determined by visually observing the magnetic domain image displayed on the display unit 45 by the operator, and a magnetic domain refinement signal indicating the point of the magnetic domain refinement treatment line may be input to the laser irradiation device 500.

Next, the magnetic domain refinement treatment is preferentially performed by introducing the tensile stress on the point determined in the step S64 in the magnetic domain control treatment line 52 of the grain-oriented electrical steel sheet 50 (step S66). Preferably, the magnetic domain refinement treatment is performed only on the point determined in the step S64. The magnetic domain refinement treatment of the step S66 may be performed by irradiation with the laser beam LB by the laser irradiation device 500, or other means such as electron beam irradiation may be adopted.

Next, processing in the step S64 executed by the calculation unit 41 of the analysis device 40 is described.

The calculation unit 41 derives the spatial distribution of the magnetic domain width of the grain-oriented electrical steel sheet 50 using the line segment method or the Fourier transform, and determines a point at which the magnetic domain width is larger than a predetermined value (for example, about 500 $\mu$m) in the magnetic domain control treatment line 52 of the grain-oriented electrical steel sheet 50 as a point where the magnetic domain refinement treatment is applied.

In the line segment method, evaluation is performed by drawing a line segment perpendicular to the magnetic domain. The interval between the line segments is set to 3 lines per 1 cm in a direction parallel to the magnetic domain, and the magnetic domain width is derived from the interval between intersection points of the 180° magnetic wall and the line segment.

The Fourier transform is particularly effective as a means for analyzing a magnetic domain structure of a magnetic body having a periodic magnetic domain structure such as a grain-oriented electrical steel sheet. Hereinafter, a method for deriving a spatial distribution of a magnetic domain width of a grain-oriented electrical steel sheet is described using a short-term two-dimensional Fourier transform (Hereinafter, it is referred to as "ST2DFT".) obtained by expanding a short-term Fourier transform, which is one of signal processing methods that have been used for time-frequency analysis of audio signals for a long time, to a two-dimensional region.

An image (magnetic domain image) represented by an image signal acquired by the image acquisition device 30 is expressed as x (k, 1) as a data column of two-dimensional coordinates (k-1 coordinates). In the present embodiment, the magnetic domain image to be analyzed is an image binarized by two types of colors such as gray scale, or an image expressed by three or more gradations (multiple gradations).

In order to derive the spatial distribution of the magnetic domain width of the grain-oriented electrical steel sheet 50, the calculation unit 41 executes the following steps (A-1), (A-2), and (A-3).

(A-1) Step of cutting out a plurality of partial regions from magnetic domain image;
(A-2) Step of performing ST2DFT;
(A-3) Step of deriving spatial distribution of magnetic domain width.

Hereinafter, each step is described in detail.

(A-1) Step of cutting out a plurality of partial regions from magnetic domain image

In order to cut out a plurality of partial regions from a magnetic domain image and analyze each frequency structure, a window function Wa (k, 1) of a rectangular window in which a range in the k direction is $0 \leq k \leq N_k\text{-}1$ and a range in the 1 direction is $0 \leq 1 \leq N_1\text{-}1$ is used ($N_k$ and $N_1$ are natural numbers). As the window function Wa (k, 1), a Hamming window, a Hanning window, a Blackman window, or the like can be applied.

When the observation position in the data column x (k, 1) of the magnetic domain image is expressed by an index (n, m), and the shift amounts of the window function Wa (k, 1) in the k direction and the 1 direction are expressed as $S_k$ and $S_1$, respectively (n, m, $S_k$, and $S_1$ are integers.), a data column $x_{nm}$ (k-$nS_k$, 1-$mS_1$) of a partial region obtained by cutting out a range of $nS_k \leq k \leq nS_k + N_k\text{-}1$ and $mS_1 \leq 1 \leq mS_1 + N_1\text{-}1$ from the magnetic domain image is obtained as in Expression (1).
(Mathematical Formula 1)

$$x_{nm}(k - nS_k, l - mS_l) = W_a(k - nS_k, l - mS_l)x(k, l) \qquad \cdots (1)$$

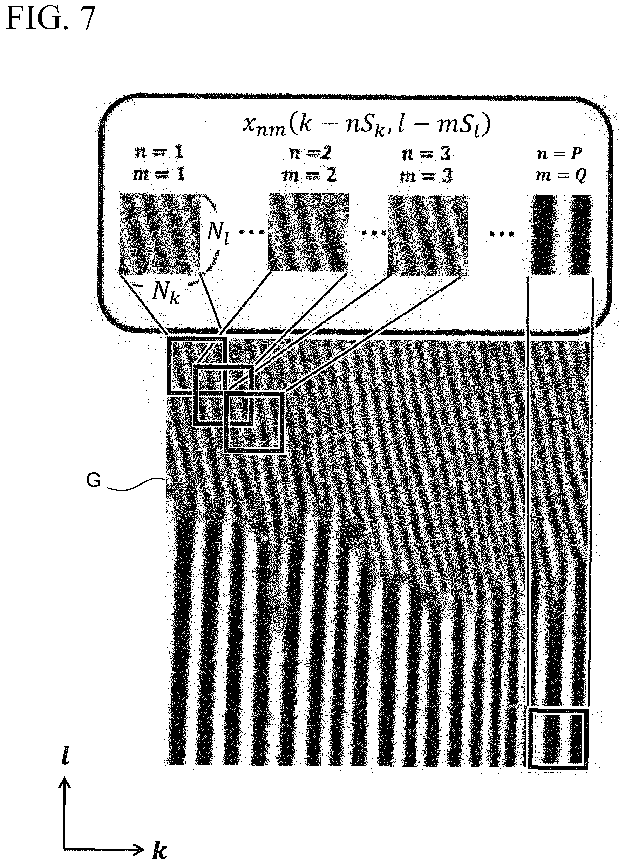

FIG. 7 illustrates an example in which partial regions respectively corresponding to the observation positions (n, m) = (1, 1), (2, 2), (3, 3),..., and (P, Q) (P and Q are natural numbers) are cut out from the magnetic domain image G.

In the present embodiment, $N_k$ and $N_1$ that define the range of the window function Wa (k, 1) are parameters corresponding to the number of pixels in the k direction and the number of pixels in the l direction in the partial region, respectively.

(A-2) Step of performing ST2DFT

When the data column of the partial region is defined as $x_{nm}$ (n', m') = $x_{nm}$ (k-$nS_k$, 1-$mS_1$), and the two-dimensional Fourier transform is performed on $x_{nm}$ (n', m'), a partial Fourier image X ($f_k$, $f_l$, n, m) corresponding to the partial region of the observation position (n, m) is obtained as in Expression (2).
(Mathematical Formula 2)

$$X(f_k, f_l, n, m) = \sum_{n'=0}^{N_k-1} \sum_{m'=0}^{N_l-1} x_{nm}(n', m') \exp\left\{-2\pi j\left(\frac{f_k n'}{N_k} + \frac{f_l m'}{N_l}\right)\right\} \qquad \cdots (2)$$

Here, $f_k$ and $f_l$ are space frequencies.

When the resolution of the space frequency $f_k$ is denoted by $\Delta f_k$ and the resolution of the space frequency $f_l$ is denoted by $\Delta f_l$, $\Delta f_k$ and $\Delta f_l$ are defined as in Expression (3).
(Mathematical Formula 3)

$$\begin{cases} \Delta f_k = \dfrac{2}{N_k \Delta k} \\ \Delta f_l = \dfrac{2}{N_l \Delta l} \end{cases} \qquad \cdots (3)$$

Δk and Δl are the space resolution in the k direction and the space resolution in the l direction in the magnetic domain image, respectively.

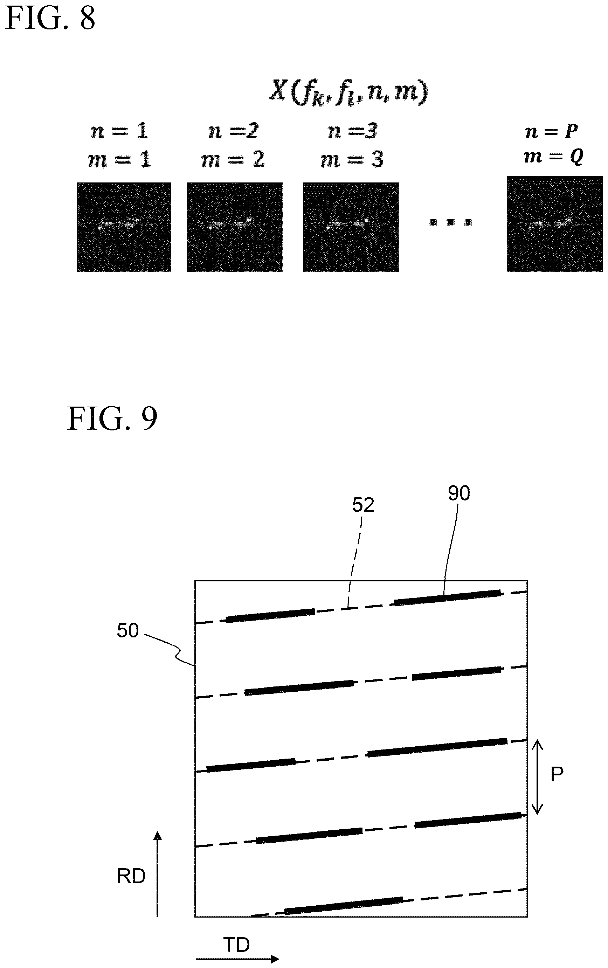

For example, when the two-dimensional Fourier transform is performed on the data column $x_{nm}$ (k-n$S_k$, l-m$S_l$) of each partial region illustrated in FIG. 7, a partial Fourier image X ($f_k$, $f_l$, n, m) is obtained for each observation position (n, m) as illustrated in FIG. 8.

(A-3) Step of deriving spatial distribution of magnetic domain width

When the partial Fourier image X ($f_k$, $f_l$, n, m) is obtained, the coordinates (k component $f_k^{max}$ (n, m) and l component $f_l^{max}$ (n, m)) of the peak position of the spot of the partial Fourier image X ($f_k$, $f_l$, n, m) are obtained. Note that, regarding the derivation of the peak position, a region in the vicinity of k = 0 and 1 = 0 is a part that greatly depends on the contrast of the image, and thus is excluded.

Then, the spatial distribution L (n, m) of the magnetic domain width is derived as in Expression (4) from the resolution of the space frequency defined by Expression (3) and the peak position of the spot of the partial Fourier image. (Mathematical Formula 4)

$$L(n,m) = \frac{1}{\sqrt{\left(\Delta f_k f_k^{max}(n,m)\right)^2 + \left(\Delta f_l f_l^{max}(n,m)\right)^2}} \quad \cdots (4)$$

As described above, by using ST2DFT, it is possible to quantitatively derive the spatial distribution L (n, m) of the magnetic domain width while maintaining the position information of the magnetic domain image. FIGS. 1A to 1C described above illustrate the analysis result of the magnetic domain width derived by ST2DFT.

The calculation unit 41 derives the spatial distribution L (n, m) of the magnetic domain width, and then, as shown in FIG. 9, the calculation unit 41 determines a point where the magnetic domain width is a predetermined value or more (for example, about 500 μm or more) in the magnetic domain control treatment line 52 (broken line in FIG. 9) of the grain-oriented electrical steel sheet 50 as the magnetic domain refinement treatment line 90 (solid line in FIG. 9) to which the magnetic domain refinement treatment is applied. The control unit 513 of the laser irradiation device 500 performs control to turn on the power of the laser beam LB with respect to the magnetic domain refinement treatment line 90 in the magnetic domain control treatment line 52, and preferably to turn off the power of the laser beam LB with respect to other points. As a result, a groove is formed or thermal strain is introduced along the magnetic domain refinement treatment line 90. It is not necessary that the above-described "predetermined value" is precisely set to be 500 μm. A grain-oriented electrical steel sheet achieving both iron loss reduction and noise reduction can be provided by setting the predetermined value within the range of approximately 400 μm to 600 μm. The lower limit of the predetermined value may be 425 μm, 450 μm, or 475 μm. The upper limit of the predetermined value may be 575 μm, 550 μm, or 525 μm.

In the magnetic domain image obtained by the above procedure, the magnetic domain refinement treatment line 90 may be unclear. In this case, the observation conditions may be adjusted so that the magnetic domain refinement treatment line 90 can be clearly confirmed. For example, the magnetic domain refinement treatment line 90 can be clarified by applying a DC magnetic field along the direction perpendicular to the sheet surface (thickness direction) of the grain-oriented electrical steel sheet.

Next, the grain-oriented electrical steel sheet 50 according to the present embodiment is described. The grain-oriented electrical steel sheet 50 according to the present embodiment has, as illustrated in FIG. 9, a magnetic domain refinement treatment line 90. The magnetic domain refinement treatment line 90 is a part on which magnetic domain refinement treatment is performed. The magnetic domain refinement treatment line 90 is, for example, a groove, and a thermal strain, etc. In a case in which the magnetic domain refinement treatment line 90 is the groove, the magnetic domain refinement treatment line 90 is easily visible. In a case in which the magnetic domain refinement treatment line 90 is hardly visually recognized aspect, such as the thermal strain, the magnetic domain refinement treatment line 90 also can be clearly observed by photographing a magnetic domain image while a DC magnetic field is applied along a sheet surface perpendicular direction (thickness direction) of the grain-oriented electrical steel sheet 50.

As illustrated in FIG. 9, the magnetic domain refinement treatment line 90 is disposed on a line forming an angle of 0° to 45° with respect to the orthogonal-to-rolling direction (TD), that is, the magnetic domain control treatment line 52. The magnetic domain control treatment lines 52 form an angle of 0° to 45° with respect to the orthogonal-to-rolling direction (TD) on the surface of the grain-oriented electrical steel sheet 50, and are arranged along the rolling direction (RD). The magnetic domain control treatment lines 52 are preferably arranged in parallel to each other. The magnetic domain control treatment line 52 corresponds to the locus of the focal point of the laser beam LB in the manufacture stage of the grain-oriented electrical steel sheet 50. The magnetic domain control treatment line 52 does not exist as an entity in the grain-oriented electrical steel sheet 50, but is an imaginary line along the magnetic domain refinement treatment line 90. The magnetic domain control treatment line 52 can be specified by such as drawing a line along the magnetic domain refinement treatment line 90 in accordance with the above-described procedure. The angle formed by the orthogonal-to-rolling direction (TD) and the extending direction of the magnetic domain refinement treatment line 90 is the same as the angle formed by the orthogonal-to-rolling direction (TD) and the extending direction of the magnetic domain control treatment line 52 provided with the magnetic domain refinement treatment line 90.

The magnetic domain refinement treatment line 90 form an angle of 0° to 45° with respect to the orthogonal-to-rolling direction (TD) on the surface of the grain-oriented electrical steel sheet 50. When the angle formed by the magnetic domain refinement treatment line 90 and the orthogonal-to-rolling direction (TD) is more than 45°, the effect of reducing the iron loss cannot be obtained. The angle formed by the magnetic domain refinement treatment line 90 and the orthogonal-to-rolling direction (TD) is preferably 1° or more, 5° or more, or 10° or more. The angle formed by the magnetic domain refinement treatment line 90 and the orthogonal-to-rolling direction (TD) is preferably 40° or less, 30° or less, or 20° or less.

In the grain-oriented electrical steel sheet 50, the angle formed by the magnetic domain control treatment line 52 and the orthogonal-to-rolling direction (TD) may be uniform or may vary. The angle formed by the magnetic domain control treatment line 52 and the orthogonal-to-rolling direction (TD) may be set to 0° to 45° in only a part of the grain-oriented electrical steel sheet 50, or the angle formed by the magnetic domain control treatment line 52 and the orthogonal-to-rolling direction (TD) may be set to 0° to 45° in all the regions of the grain-oriented electrical steel sheet 50. In addition, the average value of the angles formed by the magnetic domain control treatment line 52 and the orthogonal-to-rolling direction (TD) in the grain-oriented electrical steel sheet 50 may be set to 0° to 45°. The angle formed by the magnetic domain control treatment line 52 and the orthogonal-to-rolling direction (TD) or the average value thereof may be 1° or more, 3° or more, or 5° or more. The angle formed by the magnetic domain control treatment line 52 and the orthogonal-to-rolling direction (TD) or the average value thereof may be 40° or less, 35° or less, or 30° or less.

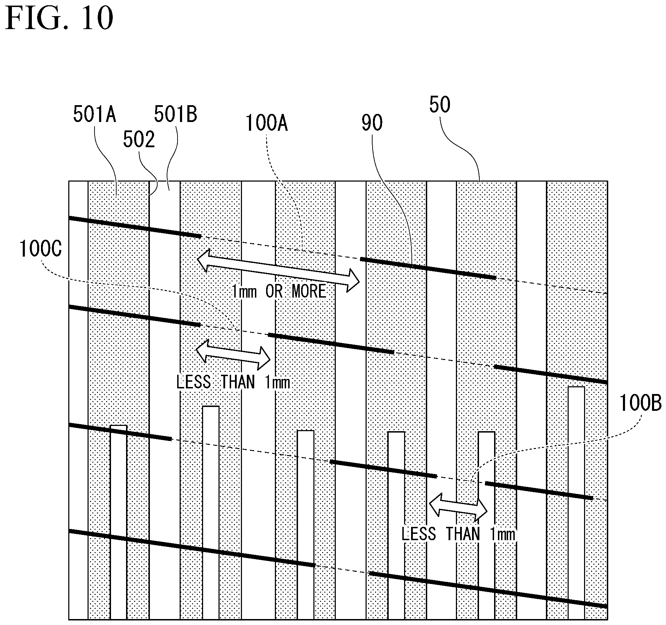

In the grain-oriented electrical steel sheet 50 according to the present embodiment, it is preferable that the average magnetic domain width in an area, in which the magnetic domain refinement treatment line 90 does not exist among the magnetic domain control treatment lines 52, and of which the length is 1 mm or more, is 500 $\mu$m or less. The area, in which the magnetic domain refinement treatment line 90 does not exist among the magnetic domain control treatment lines 52, is an area between a plurality of the magnetic domain refinement treatment lines 90 which are arranged on the same line. The length of the area, in which the magnetic domain refinement treatment line 90 does not exist among the magnetic domain control treatment lines 52, is a distance between the plurality of the magnetic domain refinement treatment lines 90 which are arranged on the same line, and is measured along to the magnetic domain refinement treatment lines 90. Hereinafter, the area, in which the magnetic domain refinement treatment line 90 does not exist among the magnetic domain control treatment lines 52, may be referred as a non-magnetic domain refinement treatment line. For example, in the grain-oriented electrical steel sheet 10 illustrated in FIG. 10, the non-magnetic domain refinement treatment line to which the reference symbol 100A is added corresponds to "an area, in which the magnetic domain refinement treatment line 90 does not exist among the magnetic domain control treatment lines 52, and of which length is 1 mm or more".

When the average magnetic domain width in the non-magnetic domain refinement treatment line having the length of 1 mm or more is 500 $\mu$m or less, it is preferable since the iron loss of the grain-oriented electrical steel sheet 50 is further reduced. It is more preferable that the average magnetic domain width in the non-magnetic domain refinement treatment line having length of 1 mm or more is 480 $\mu$m or less, 450 $\mu$m or less, or 400 $\mu$m or less.

In addition, in the grain-oriented electrical steel sheet 50 in which the average magnetic domain width in the non-magnetic domain refinement treatment line having the length of 1 mm or more among the magnetic domain control treatment line 52 is 500 $\mu$m or less, the magnetic domain refinement treatment is suppressed to a minimum. As described above, in the grain-oriented electrical steel sheet 50 before the magnetic domain refinement treatment, a region having large magnetic domain width and a region having small magnetic domain width exist intermixedly. The grain-oriented electrical steel sheet 50 in which the average magnetic domain width in the non-magnetic domain refinement treatment line having the length of 1 mm or more among the magnetic domain control treatment line 52 is 500 $\mu$m or less can be obtained by preliminarily specifying the distribution of the magnetic domain width and minimizing the magnetic domain refinement treatment with respect to the region having small magnetic domain. In such grain-oriented electrical steel sheet 50, the magnetic domain refinement treatment to the region having small magnetic domain, of which the effect of reducing iron loss is small, can be adequately avoided, so that the formation of the reflux magnetic domain caused by the magnetic domain refinement treatment can be decreased and the noise is further suppressed.

In the grain-oriented electrical steel sheet 50 according to the present embodiment, it is preferable that the average magnetic domain width in an area, in which the magnetic domain refinement treatment line 90 does not exist among the magnetic domain control treatment lines 52, and which includes two or more of magnetic walls 502 (i.e. 180° magnetic walls), is 500 $\mu$m or less. The area, in which the magnetic domain refinement treatment line 90 does not exist among the magnetic domain control treatment lines 52, is the area between a plurality of the magnetic domain refinement treatment lines 90 which are arranged on the same line, and is the above-described non-magnetic domain refinement treatment line. For example, in the grain-oriented electrical steel sheet 10 illustrated in FIG. 10, the non-magnetic domain refinement treatment line to which the reference symbol 100A is added and the non-magnetic domain refinement treatment line to which the reference symbol 100B is added correspond to "an area, in which the magnetic domain refinement treatment line 90 does not exist among the magnetic domain control treatment lines 52, and which includes two or more of magnetic walls 502".

When the average magnetic domain width in the non-magnetic domain refinement treatment line including two or more of magnetic walls 502 is 500 μm or less, it is preferable since the iron loss of the grain-oriented electrical steel sheet 50 is further reduced. In addition, the grain-oriented electrical steel sheet 50 in which the average magnetic domain width in the non-magnetic domain refinement treatment line including two or more of magnetic walls 502 is 500 μm or less is obtained by preferentially performing the magnetic domain refinement treatment on a region having a large original magnetic domain width (for example, a region having a original magnetic domain width of about 500 μm or more) of the grain-oriented electrical steel sheet. Therefore, when the average magnetic domain width in the non-magnetic domain refinement treatment line including two or more of magnetic walls 502 is 500 μm or less, the magnetic domain refinement treatment to the region having small magnetic domain, of which the effect of reducing iron loss is small, can be adequately avoided, so that the formation of the reflux magnetic domain caused by the magnetic domain refinement treatment can be decreased and the noise of the grain-oriented electrical steel sheet 50 is further suppressed.

In the region in which the magnetic domain refinement treatment line 90 exists, the magnetic domain width is naturally decreased. Therefore, the average magnetic domain width in the region in which the magnetic domain refinement treatment line 90 exists is not limited. Nevertheless, the average magnetic domain width in the region in which the magnetic domain refinement treatment line 90 exists may be defined as 500 μm or less, 480 μm or less, 450 μm or less, or 400 μm or less.

In the present embodiment, the ratio of the magnetic domain refinement treatment line 90 in the magnetic domain control treatment line 52 is defined as the rate of the length of the magnetic domain refinement treatment line 90 with respect to the total extension of the length of the magnetic domain control treatment line 52, and is preferably 10 % or more and 90% or less.

It is preferable that the ratio of the magnetic domain refinement treatment line 90 in the magnetic domain control treatment line 52 is 10% or more, since the effect of magnetic domain refinement is hardly to be obtained when it is less than 10%, and it is preferable that the ratio of the magnetic domain refinement treatment line 90 in the magnetic domain control treatment line 52 is 90% or less, since the ratio of more than 90% is not preferable in view of reducing the noise.

In view of reducing the noise, the smaller the ratio of the magnetic domain refinement treatment line 90 with respect to the magnetic domain control treatment line 52 is, the more preferable it is. Even if said ratio is small, low iron loss can be achieved by setting the average magnetic domain width in the non-magnetic domain refinement treatment line having the length of 1 mm or more among the magnetic domain control treatment line 52 to be 500 μm or less, or by setting the average magnetic domain width in the non-magnetic domain refinement treatment line including two or more of magnetic walls 502 to be 500 μm or less.

It is preferable that the ratio of the magnetic domain refinement treatment line 90 with respect to the total extension of the magnetic domain control treatment line 52 is 15% or more, 20% or more, or 30% or more. It is preferable that the ratio of the magnetic domain refinement treatment line 90 with respect to the total extension of the magnetic domain control treatment line 52 is 80% or less, 70% or less, or 60% or less.

Moreover, in the present embodiment, it is preferable that the magnetic domain refinement treatment line 90 exists on the magnetic domain control treatment line 52 in a non-single period. That the magnetic domain refinement treatment line 90 exists on the magnetic domain control treatment line 52 in a non-single period means that the case does not correspond to "the case where there are 10 or more magnetic domain refinement treatment lines 90 on average per 1 cm, and the standard deviation of the lengths of the non-magnetic domain refinement treatment lines between the magnetic domain refinement treatment lines 90 is 20 μm or less". That is, in the present embodiment, the magnetic domain refinement treatment line 90 obtained by performing the magnetic domain control by the normal pulse laser on the entire surface of the steel sheet is considered not to "exist in a non-single period".

As described above, by performing the magnetic domain refinement treatment on only the region having a large original magnetic domain width of the grain-oriented electrical steel sheet, adverse effects such as an increase in hysteresis loss and deterioration of noise characteristics can be minimized, and the effect of magnetic domain refinement can be maximized. This makes it possible to achieve both a reduction in iron loss and a reduction in noise.

(Measurement method)

Hereinafter, a method for measuring parameters relating to the grain-oriented electrical steel sheet 50 according to the present embodiment is described. Note that measurement of any parameter is performed on a sample of a predetermined size collected from the grain-oriented electrical steel sheet 50. For example, a rectangular sample having both sides of 100 mm (or 100 mm or more) in length can be cut out from the grain-oriented electrical steel sheet 50 and subjected to measurement. When the grain-oriented electrical steel sheet 50 is a coil, a sample may be collected from an arbitrary point of the coil. When the grain-oriented electrical steel sheet 50 is a component incorporated in an electrical product such as a transformer or a motor, a sample may be collected from any point of the component. When the size of the component is small, the length of one side of the sample may be less than 100 mm. In this case, the total value of the sample areas is set to 10,000 mm$^2$ or more. At that time, it is desirable to collect a sample by a method such as wire cutting in order to minimize the influence of mechanical strain or the like on the sample.

(Angle formed by magnetic domain control treatment line 52 and orthogonal-to-rolling direction (TD))

The method for measuring the angle formed by the magnetic domain control treatment line 52 and the orthogonal-to-rolling direction (TD) is as follows.

First, the magnetic domain refinement treatment line 90 included in the sample is specified. When the magnetic domain refinement treatment line 90 is visible aspect, such as a groove, any treatment for the magnetic domain refinement treatment line 90 is not necessary. In a case where the magnetic domain refinement treatment line 90 is hardly visually recognized aspect, such as thermal strain, for example, a magnetic domain image is photographed using an image acquisition device as illustrated in FIG. 3. If necessary, a magnetic domain image is photographed while a DC magnetic field is applied along a sheet surface perpendicular direction (thickness direction) of the grain-oriented electrical steel sheet 50. The position of the magnetic domain refinement treatment line 90 can be specified by observing the magnetic domain image.

Next, the orthogonal-to-rolling direction (TD) is specified.

(1) When the sample is cut out from the coiled grain-oriented electrical steel sheet 50, the width direction of the grain-oriented electrical steel sheet 50 can be regarded as the orthogonal-to-rolling direction (TD).
(2) When the sample is cut out from a part or the like of an electrical product, the orthogonal-to-rolling direction (TD) is specified from a rolling defect on the surface of the grain-oriented electrical steel sheet 50. An extending direction of a rolling defect is regarded as a rolling direction (RD), and a direction perpendicular to the rolling direction (RD) and parallel to the sheet surface is regarded as an orthogonal-to-rolling direction (TD).
(3) When it is difficult to specify the orthogonal-to-rolling direction (TD) from a rolling defect on the surface of the grain-oriented electrical steel sheet 50, the orthogonal-to-rolling direction (TD) is specified from the crystal orientation of the grain-oriented electrical steel sheet 50. Specifically, the crystal orientation of the grain-oriented electrical steel sheet 50 to be evaluated is measured at a plurality of points. Then, a direction in which the deviation angle from the GOSS orientation at the measurement point is minimized is regarded as a rolling direction (RD), and a direction perpendicular to the rolling direction (RD) and parallel to the surface of the grain-oriented electrical steel sheet 50 is regarded as an orthogonal-to-rolling direction (TD).

In any case, from the viewpoint of convenience of measurement, it is preferable to cut out the sample from the grain-oriented electrical steel sheet 50 such that one side of the sample coincides with the orthogonal-to-rolling direction (TD).

The magnetic domain control treatment line 52 does not exist as an entity in the grain-oriented electrical steel sheet 50, but is an imaginary line along the magnetic domain refinement treatment line 90. Therefore, the narrow angle formed by the magnetic domain refinement treatment line 90 specified by the above-described procedure and the orthogonal-to-rolling direction (TD) can be regarded as the angle formed by the magnetic domain control treatment line 52 and the orthogonal-to-rolling direction (TD).

(Average magnetic domain width in an area in which the magnetic domain refinement treatment line 90 does not exist and of which the length is 1 mm or more)

The method for measuring the average magnetic domain width in the non-magnetic domain refinement treatment line having the length of 1 mm or more among the magnetic domain control treatment lines 52 is as follows.

First, a magnetic domain image of the sample is photographed using an image acquisition device as illustrated in FIG. 3. If necessary, the magnetic domain refinement treatment line 90 of the sample is clarified by photographing the magnetic domain image while a DC magnetic field is applied along a sheet surface perpendicular direction (thickness direction) of the sample. An example of the magnetic domain image is shown in FIG. 10. In the magnetic domain image, the magnetic domain 501A and the magnetic domain 501B have a band shape. In view of clarity, in FIG. 10, the magnetic domain adjacent to each other is indicated with different color. That is, for the purpose of illustration, the magnetic domain 501A is hatched and the magnetic domain 501B adjacent to the magnetic domain 501A is not hatched. The border between the two magnetic domains 501A and 501B adjacent to each other is the magnetic wall 502.

Next, a virtual line along to the magnetic domain refinement treatment line 90 included in the magnetic domain image is assumed. The virtual line corresponds to the magnetic domain control treatment line 52. Then, the length of a part in which the magnetic domain refinement treatment line 90 does not exist in the virtual line (hereinafter, the area is referred as "non-magnetic domain refinement treatment line") is measured. The length of the non-magnetic domain refinement treatment line means the length along to the virtual line, i.e., along to the magnetic domain refinement treatment line 90. Thereby, all of the non-magnetic domain refinement treatment lines having length of 1 mm or more included in the sample are extracted. For example, the non-magnetic domain refinement treatment line to which the reference sign 100A is added is extracted, since the length thereof is 1 mm or more. The non-magnetic domain refinement treatment lines to which the reference signs 100B and 100C are added are not extracted, since the length thereof is less than 1 mm. Moreover, the total number of the magnetic domains 501A and 501B included in all of the non-magnetic domain refinement treatment lines having length of 1 mm or more are counted. For example, the number of the magnetic domains included in the non-magnetic domain refinement treatment line to which the reference symbol 100A is added is 4. The average magnetic domain width in the non-magnetic domain refinement treatment line having the length of 1 mm or more among the magnetic domain control treatment lines 52 is calculated by dividing the total length of all of the non-magnetic domain refinement treatment line having the length of 1 mm or more included in the sample by the total number of the magnetic domains 501A and 501B included in these non-magnetic domain refinement treatment lines.

(Average magnetic domain width in an area in which the magnetic domain refinement treatment line 90 does not exist and which includes 2 or more of magnetic walls 502)

The method for measuring the average magnetic domain width in the non-magnetic domain refinement treatment line including 2 or more of the magnetic walls 502 is as follows.

First, a magnetic domain image of the sample is photographed using an image acquisition device as illustrated in FIG. 3. If necessary, the magnetic domain refinement treatment line 90 of the sample is clarified by photographing the magnetic domain image while a DC magnetic field is applied along a sheet surface perpendicular direction (thickness direction) of the sample. An example of the magnetic domain image is shown in FIG. 10. The border between the magnetic domain 501A and the magnetic domain 501B adjacent to each other is the magnetic wall 502.

Next, a virtual line along to the magnetic domain refinement treatment line 90 included in the magnetic domain image is assumed. The virtual line corresponds to the magnetic domain control treatment line 52. Then, the number of the magnetic walls 502 included in a part in which the magnetic domain refinement treatment line 90 does not exist in the virtual line (hereinafter, the area is referred as "non-magnetic domain refinement treatment line") is counted. Thereby, all of the non-magnetic domain refinement treatment lines including 2 or more of magnetic walls 502 included in the sample are extracted. For example, the non-magnetic domain refinement treatment line to which the reference sign 100A is added is extracted, since the number of the magnetic walls 502 included therein is 3. The non-magnetic domain refinement treatment line to which the reference sign 100B is added is not extracted, since the number of the magnetic walls 502 included therein is 1. The non-magnetic domain refinement treatment line to which the reference sign 100C is added is extracted, since the number of the magnetic walls 502 included therein is 2.

Moreover, the total number of the magnetic domains 501A and 501B included in all of the non-magnetic domain refinement treatment lines including 2 or more of the magnetic walls 502 are counted. For example, the number of the magnetic domains 501A and 501B included in the non-magnetic domain refinement treatment line to which the reference symbol 100A is added is 4. The number of the magnetic domains 501A and 501B included in the non-magnetic domain refinement treatment line to which the reference symbol 100C is added is 3. The average magnetic domain width in the non-magnetic domain refinement treatment line including 2 or more of the magnetic walls 502 is calculated by dividing the total length of all of the non-magnetic domain refinement treatment line including 2 or more of the magnetic walls 502 included in the sample by the total number of the magnetic domains 501A and 501B included in said non-magnetic domain refinement treatment lines.

A method for measuring the ratio of the magnetic domain refinement treatment line 90 with respect to a total extension of the magnetic domain control treatment lines 52 is as follows. First, the magnetic domain control treatment lines 52 and the magnetic domain refinement treatment line 90 are specified in accordance with the above-described procedure. Next, a total length of all of the magnetic domain control treatment lines 52 included in the sample and a total length of all of the magnetic domain refinement treatment line 90 included in the sample are calculated. Then, the ratio of the magnetic domain refinement treatment line 90 with respect to a total extension of the magnetic domain control treatment lines 52 is calculated by dividing the total length of all of the magnetic domain refinement treatment line 90 included in the sample by the total length of all of the magnetic domain control treatment lines 52 included in the sample.

A method of determining whether the magnetic domain refinement treatment line 90 exists in a non-single period is as follows. First, the magnetic domain control treatment line 52 and the magnetic domain refinement treatment line 90 included in the sample are specified by the above-described procedure. As described above, that the magnetic domain refinement treatment line 90 exists in a non-single period means that the case does not correspond to "the case where there are 10 or more magnetic domain refinement treatment lines 90 on average per 1 cm, and the standard deviation of the lengths of the non-magnetic domain refinement treatment lines between the magnetic domain refinement treatment lines 90 is 20 $\mu$m or less". Therefore, in the determination, it is determined whether each of the plurality of magnetic domain control treatment lines 52 included in the sample (for example, a rectangular sample with a length of 100 mm on both sides) includes 10 or more magnetic domain refinement treatment lines 90 on average per 1 cm. For example, when the length of one magnetic domain control treatment line 52 included in the sample is X cm and the number of magnetic domain refinement treatment lines 90 included in the magnetic domain control treatment line 52 is y, it is determined that there are y/X magnetic domain refinement treatment lines 90 on average per 1 cm in the magnetic domain control treatment line 52. Further, in each of the magnetic domain control treatment lines 52 determined to include 10 or more magnetic domain refinement treatment lines 90 on average per 1 cm, it is determined whether the standard deviation of the length of the non-magnetic domain refinement treatment line is 20 $\mu$m or less. When the magnetic domain refinement treatment line 90 is provided in a non-single period in 50% or more of all the magnetic domain control treatment lines 52 included in the sample, it is determined that the magnetic domain refinement treatment line 90 exists in the non-single period in the sample.

Examples

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

The magnetic domain refinement treatment was performed under various conditions shown in Table 1 on the grain-oriented electrical steel sheets of the same lot which are classified as 23P085 in Table 2 of JIS C 2553:2019 "Grain-oriented electrical steel strip". The noise and iron loss of the grain-oriented electrical steel sheets subjected to the magnetic domain refinement treatment obtained as a result are evaluated and described in Table 2. In each of the Examples and Comparative Examples, the angle formed by the magnetic domain control treatment line and the orthogonal-to-rolling direction was identical in all of the magnetic domain control treatment line.

The methods for evaluating noise and iron loss were as follows. First, 180 grain-oriented electrical steel sheets having a sheet thickness of 0.23 mm were laminated to form a three-phase transformer core. The widths of the foot and the yoke of the three-phase transformer core were both 150 mm. The height and width of the outer shape of the three-phase transformer core were both 750 mm. Noise and iron loss of these three-phase transformer cores were measured. The measurement conditions were a frequency of 50 Hz and an excitation magnetic flux density of 1.7 T.

In measuring the noise, microphones were arranged at equal intervals at eight points around the transformer in which the three-phase transformer core was incorporated. The distance between the transformer and the microphone was 30 cm. The values obtained by correcting the A characteristics to the noise measurement results by the microphones and averaging the results are described in Table 2 as the noise evaluation results (unit: dBA) of the grain-oriented electrical steel sheets. An example in which the evaluation result of noise was 33.5 dBA or less was determined to be an example in which noise reduction was achieved. The noise evaluation result determined to be unacceptable was underlined.

The iron loss was obtained by measuring voltages and currents on the primary side and the secondary side with a power analyzer when excitation was performed at a frequency of 50 Hz and an excitation magnetic flux density of 1.7 T as described above. The obtained iron loss is described in Table 2 as an iron loss evaluation result (unit: W/kg) of the grain-oriented electrical steel sheet. An example in which the evaluation result of the iron loss was 1.00 W/kg or less was determined to be an example in which iron loss reduction was achieved. The noise evaluation result determined to be unacceptable was underlined.

Further, in the grain-oriented electrical steel sheet subjected to the magnetic domain refinement treatment, the average magnetic domain width in the part in which the magnetic domain refinement treatment line does not exist and of which the length is 1 mm or more, and the average magnetic domain width in the part in which the magnetic domain refinement treatment line does not exist and which includes 2 or more of the magnetic walls were measured, and are described in Table 2. The measurement method for the average magnetic domain width was in according to the procedure described above. A rectangular sample having both sides of 100 mm in length was cut out from a three-phase transformer core for measuring noise and iron loss, and subjected to measurement.

[Table 1]

| | Angle formed by magnetic domain control treatment line and orthogonal-to-rolling direction TD (°) | Position on which magnetic domain refinement treatment is performed | Method for magnetic domain refinement | Ratio of magnetic domain refinement treatment line with respect to total extension of magnetic domain control treatment lines (%) |
|---|---|---|---|---|
| 1 | --- | No irradiating | Laser | 0 |
| 2 | 50 | Entire in width direction | Laser | 100 |
| 3 | 50 | Non-single period | Laser | 40 |
| 4 | 50 | Selecting point having magnetic domain width of 500 μm or more | Laser | 41 |
| 5 | 50 | Stable pulse | Laser | 40 |
| 6 | 5 | Entire in width direction | Laser | 100 |
| 7 | 40 | Stable pulse | Laser | 50 |
| 8 | 20 | Stable pulse | Laser | 50 |
| 9 | 10 | Stable pulse | Laser | 10 |
| 10 | 5 | Stable pulse | Laser | 90 |
| 11 | 40 | Non-single period | Laser | 50 |
| 12 | 20 | Non-single period | Laser | 50 |
| 13 | 10 | Non-single period | Laser | 50 |
| 14 | 5 | Non-single period | Laser | 10 |
| 15 | 5 | Non-single period | Laser | 90 |
| 16 | 45 | Selecting point having magnetic domain width of 500 μm or more | Laser | 88 |
| 17 | 30 | Selecting point having magnetic domain width of 500 μm or more | Laser | 61 |
| 18 | 15 | Selecting point having magnetic domain width of 500 μm or more | Laser | 48 |
| 19 | 5 | Selecting point having magnetic domain width of 500 μm or more | Laser | 53 |
| 20 | 5 | Selecting point having magnetic domain width of 500 μm or more | Laser | 73 |
| 21 | 5 | Selecting point having magnetic domain width of 500 μm or more | Laser | 11 |
| 22 | 0 | Selecting point having magnetic domain width of 500 μm or more | Laser | 63 |
| 23 | 5 | Non-single period | Laser | 8 |
| 24 | 5 | Selecting point having magnetic domain width of 500 μm or more | Laser | 9 |
| 25 | 5 | Non-single period | Laser | 91 |
| 26 | 5 | Selecting point having magnetic domain width of 500 μm or more | Laser | 93 |
| 27 | 15 | Selecting point having magnetic domain width of 500 μm or more | Forming groove | 58 |
| 28 | 5 | Selecting point having magnetic domain width of 500 μm or more | Electron beam | 63 |

[Table 2]

| | | Average magnetic domain width measured in part in which magnetic domain refinement treatment line does not exist and of which length is 1 mm or more (μm) | Average magnetic domain width measured in part in which magnetic domain refinement treatment line does not exist and which includes 2 or more of magnetic walls (μm) | Evaluation result of noise @ 1.7T (dBA) | Evaluation result of iron loss @ 1.7T (W/kg) |
|---|---|---|---|---|---|
| | 1 | --- | --- | 28.29 | 1.019 |
| | 2 | --- | --- | 33.97 | 1.003 |
| | 3 | 511 | 509 | 33.92 | 1.010 |
| | 4 | 489 | 497 | 33.65 | 1.005 |
| | 5 | 506 | 512 | 33.69 | 1.002 |
| | 6 | --- | --- | 33.23 | 0.840 |
| | 7 | 584 | 569 | 32.87 | 0.984 |
| | 8 | 534 | 547 | 32.64 | 0.967 |
| | 9 | 547 | 533 | 30.14 | 0.965 |
| | 10 | 520 | 530 | 32.86 | 0.856 |
| | 11 | 538 | 554 | 30.84 | 0.894 |
| | 12 | 510 | 522 | 30.64 | 0.884 |
| | 13 | 521 | 534 | 30.31 | 0.867 |
| | 14 | 587 | 601 | 30.15 | 0.889 |
| | 15 | 507 | 506 | 30.89 | 0.854 |
| | 16 | 484 | 481 | 29.81 | 0.845 |
| | 17 | 415 | 401 | 29.64 | 0.844 |
| | 18 | 384 | 351 | 29.34 | 0.832 |
| | 19 | 364 | 358 | 28.94 | 0.807 |
| | 20 | 381 | 377 | 29.14 | 0.813 |
| | 21 | 381 | 377 | 28.77 | 0.832 |
| | 22 | 325 | 334 | 28.76 | 0.805 |
| | 23 | 513 | 526 | 30.24 | 0.926 |
| | 24 | 473 | 465 | 29.64 | 0.903 |
| | 25 | 543 | 517 | 31.71 | 0.854 |
| | 26 | 311 | 320 | 31.21 | 0.838 |
| | 27 | 466 | 458 | 29.74 | 0.832 |
| | 28 | 441 | 439 | 29.41 | 0.820 |

In Example 1, the magnetic domain refinement treatment was not performed. In Example 1, since the stress introduction line was not provided, deterioration of the noise evaluation result was not observed. On the other hand, in Example 1, iron loss reduction was not achieved.

(Example of inappropriate angle)

In Example 2 to Example 5, the angle formed by the magnetic domain control treatment line and the orthogonal-to-rolling direction was excessive. In these examples, the iron loss exceeded 1.00 W/kg and the noise exceeded 33.5 dBA. That is, in Example 2 to Example 5, although the magnetic domain refinement treatment was performed, the effect of iron loss reduction was almost not obtained while the noise was increased.

In Example 6 to Example 10, the angle formed by the magnetic domain control treatment line and the orthogonal-to-rolling direction was adequate. In these examples, the iron loss was lower than 1.00 W/kg and the noise was 33.5 dBA or less.

In Example 11 to Example 15, Example 23, and Example 25, the angle formed by the magnetic domain control treatment line and the orthogonal-to-rolling direction was adequate. In these examples, the iron loss was 1.00 W/kg or less and the noise was 33.5 dBA or less. That is, the effect of iron loss reduction was obtained without causing a significant increase of the noise by providing the magnetic domain control treatment line in an adequate angle.

In addition, in these examples, the noise tended to be further suppressed in comparison to Example 6 to Example 10, since the magnetic domain refinement treatment was performed in non-single period. For example, when Example 7 in which the magnetic domain refinement treatment was performed in stable pulse and Example 11 in which the magnetic domain refinement treatment was performed in non-single period were compared, the angle formed by the magnetic domain control treatment line and the orthogonal-to-rolling direction TD and the ratio of the magnetic domain refinement treatment line with respect to a total extension of the magnetic domain control treatment lines were same between Example 7 and Example 11. However, the evaluation result of the noise in Example 11 was better than that of Example 7.

In Example 16 to Example 22, Example 24, and Example 26 to Example 28, the angle formed by the magnetic domain control treatment line and the orthogonal-to-rolling direction was adequate and the magnetic domain refinement treatment was performed while a point in which the magnetic domain width was 500 $\mu$m or more was selected. Thereby, in Example 16 to Example 22, Example 24, and Example 26 to Example 28, a larger effect of iron loss reduction than Example 6 to Example 15, Example 23, and Example 25 was obtained.

Moreover, in Example 16 to Example 22, Example 24, and Example 26 to Example 28, the noise tended to further suppressed in comparison to Example 6 to Example 15, Example 23, and Example 25. For example, when Example 23 in which the magnetic domain refinement treatment was performed in non-single period and Example 24 in which the magnetic domain refinement treatment was selectively performed on a point in which the magnetic domain width was 500 $\mu$m or more were compared, the angle formed by the magnetic domain control treatment line and the orthogonal-to-rolling direction TD and the ratio of the magnetic domain refinement treatment line with respect to a total extension of the magnetic domain control treatment lines were same between Example 23 and Example 24. However, the evaluation result of the noise in Example 24 was better than that of Example 23.

The smaller the ratio of the magnetic domain refinement treatment line with respect to a total extension of the magnetic domain control treatment lines is, the better the evaluation value of the noise is but the smaller the effect of iron loss reduction. However, in Example 16 to Example 22, Example 24, and Example 26 to Example 28, the average magnetic domain width in a part in which the magnetic domain refinement treatment line did not exist was narrowed by selectively performing the magnetic domain refinement treatment on the point having the magnetic domain width of 500 $\mu$m or more. Therefore, in Example 16 to Example 22, Example 24, and Example 26 to Example 28, nevertheless the noise was extremely suppressed, the extremely large effect of iron loss reduction was exhibited.

Brief Description of the Reference Symbols

30 Image acquisition device
31 Light source unit
33 MO sensor
35 Image sensor
37 Signal processing unit
40 Analysis device
41 Calculation unit
43 Memory
45 Display unit
47 Input unit
49 Communication I/F
50 Grain-oriented electrical steel sheet
501A, and 501B Magnetic domain
502 Magnetic wall
52 Magnetic domain control treatment line
90 Magnetic domain refinement treatment line
100A, 100B, and 100C Non-magnetic domain refinement treatment line (Area in which magnetic domain refinement treatment line does not exist among magnetic domain control treatment line)
500 Laser irradiation device
TD Orthogonal-to-rolling direction

RD Rolling direction

**Claims**

1. A grain-oriented electrical steel sheet wherein a magnetic domain refinement treatment line, which is a part on which a magnetic domain refinement treatment is performed, exists in a magnetic domain control treatment lines which form an angle of 0° to 45° with respect to an orthogonal-to-rolling direction and are arranged in a rolling direction.

2. The grain-oriented electrical steel sheet according to claim 1, wherein an average magnetic domain width in an area, in which the magnetic domain refinement treatment line does not exist among the magnetic domain control treatment lines, and of which a length is 1 mm or more, is 500 μm or less.

3. The grain-oriented electrical steel sheet according to claim 1, wherein an average magnetic domain width in an area, in which the magnetic domain refinement treatment line does not exist among the magnetic domain control treatment lines, and which includes two or more of magnetic walls, is 500 μm or less.

4. The grain-oriented electrical steel sheet according to any one of claims 1 to 3, wherein the magnetic domain refinement treatment lines exist in a non-single period.

5. The grain-oriented electrical steel sheet according to any one of claims 1 to 3, wherein a ratio of the magnetic domain refinement treatment line with respect to a total extension of the magnetic domain control treatment lines is 10% or more and 90% or less.

6. The grain-oriented electrical steel sheet according to any one of claims 1 to 3, wherein the magnetic domain refinement treatment line is a groove.

7. The grain-oriented electrical steel sheet according to any one of claims 1 to 3, wherein the magnetic domain refinement treatment line is a thermal strain.

8. A method for manufacturing a grain-oriented electrical steel sheet, the method comprising:

   acquiring a magnetic domain image of a grain-oriented electrical steel sheet;
   determining, based on a spatial distribution of a magnetic domain width of the magnetic domain image, a point to which a magnetic domain refinement treatment is applied among magnetic domain control treatment lines which forms an angle of 0° to 45° with respect to an orthogonal-to-rolling direction of the grain-oriented electrical steel sheet and are arranged in a rolling direction; and
   performing the magnetic domain control treatment on the point determined during the determining among the magnetic domain control treatment line.

9. The method for manufacturing a grain-oriented electrical steel sheet according to claim 8, wherein in the determining, a point at which the magnetic domain width is equal to or more than a predetermined value is determined as a point to which the magnetic domain control treatment is applied.

10. The method for manufacturing a grain-oriented electrical steel sheet according to claim 8 or 9, wherein in the determining, a spatial distribution of the magnetic domain width is derived from the magnetic domain image by using two-dimensional Fourier transform.

11. The method for manufacturing a grain-oriented electrical steel sheet according to claim 8 or 9, wherein during performing the magnetic domain control treatment, the magnetic domain control treatment is performed by a laser irradiation or an electron beam irradiation.

12. The method for manufacturing a grain-oriented electrical steel sheet according to claim 10, wherein the predetermined value is within a range of 400 μm to 600 μm.

# FIG. 1A

# FIG. 1B

## FIG. 1C

## FIG. 2

MAGNETIC DOMAIN WIDTH BEFORE LASER IRRADIATION ($\mu$M)

# FIG. 3

MO SENSOR — 33

31 — LIGHT SOURCE UNIT

IMAGE SENSOR — 35

SIGNAL PROCESSING UNIT — 37

30

# FIG. 4

41 — CALCULATION UNIT

DISPLAY UNIT — 45

43 — MEMORY

INPUT UNIT — 47

COMMUNICATION I/F — 49

40

# FIG. 5

# FIG. 6

```
           ┌─────────────┐
           │    START    │
           └──────┬──────┘
                  │
                  ▼
  ┌───────────────────────────────────┐      S62
  │   ACQUIRE MAGNETIC DOMAIN IMAGE    │
  └──────────────────┬────────────────┘
                     │
                     ▼
  ┌───────────────────────────────────┐      S64
  │ DETERMINE POINT TO WHICH MAGNETIC  │
  │ DOMAIN REFINEMENT TREATMENT IS     │
  │ APPLIED FROM MAGNETIC DOMAIN IMAGE │
  └──────────────────┬────────────────┘
                     │
                     ▼
  ┌───────────────────────────────────┐      S66
  │ MAGNETIC DOMAIN REFINEMENT         │
  │ TREATMENT                          │
  └──────────────────┬────────────────┘
                     │
                     ▼
           ┌─────────────┐
           │     END     │
           └─────────────┘
```

FIG. 7

FIG. 8

$$X(f_k, f_l, n, m)$$

| $n = 1$ | $n = 2$ | $n = 3$ | | $n = P$ |
|---------|---------|---------|--|---------|
| $m = 1$ | $m = 2$ | $m = 3$ | | $m = Q$ |

FIG. 9

FIG. 10

| INTERNATIONAL SEARCH REPORT | International application No. |
| --- | --- |
| | **PCT/JP2023/012197** |

**A. CLASSIFICATION OF SUBJECT MATTER**

***C21D 8/12*** (2006.01)i; ***C22C 38/00*** (2006.01)i; ***H01F 1/147*** (2006.01)i
FI: C22C38/00 303U; H01F1/147 175; C21D8/12 D

According to International Patent Classification (IPC) or to both national classification and IPC

**B. FIELDS SEARCHED**

Minimum documentation searched (classification system followed by classification symbols)

C21D8/12; C21D9/46; C22C38/00; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 11-293340 A (KAWASAKI STEEL CORP) 26 October 1999 (1999-10-26) | 1, 5-7 |
| | claims, paragraphs [0004], [0007]-[0012], [0014], fig. 1 | |
| Y | | 2-4, 8-12 |
| Y | JP 55-119125 A (NIPPON STEEL CORP) 12 September 1980 (1980-09-12) | 2-3, 12 |
| | p. 1, lower left column, line 19 to p. 2, lower right column, line 19, fig. 2 | |
| A | | 1, 4-11 |
| Y | JP 2012-57218 A (JFE STEEL CORP) 22 March 2012 (2012-03-22) | 4 |
| | claims, paragraphs [0001]-[0006], [0010]-[0014] | |
| A | | 1-3, 5-12 |
| Y | JP 2020-169373 A (NIPPON STEEL CORP) 15 October 2020 (2020-10-15) | 8-12 |
| | claims, paragraphs [0001]-[0009], [0020]-[0049] | |
| A | | 1-7 |
| A | JP 2008-127632 A (NIPPON STEEL CORP) 05 June 2008 (2008-06-05) | 1-12 |
| | claims, paragraphs [0001], [0011], [0015]-[0040] | |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 June 2023** | **20 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/012197**

| C. | DOCUMENTS CONSIDERED TO BE RELEVANT | |
|---|---|---|
| Category* | Citation of document, with indication, where appropriate, of the relevant passages | Relevant to claim No. |
| A | CN 106282512 A (BAOSHAN IRON & STEEL) 04 January 2017 (2017-01-04) entire text, all drawings | 1-12 |

Form PCT/ISA/210 (second sheet) (January 2015)

**INTERNATIONAL SEARCH REPORT**
Information on patent family members

International application No.

**PCT/JP2023/012197**

| Patent document cited in search report | | | Publication date (day/month/year) | Patent family member(s) | Publication date (day/month/year) |
|---|---|---|---|---|---|
| JP | 11-293340 | A | 26 October 1999 | (Family: none) | |
| JP | 55-119125 | A | 12 September 1980 | (Family: none) | |
| JP | 2012-57218 | A | 22 March 2012 | (Family: none) | |
| JP | 2020-169373 | A | 15 October 2020 | (Family: none) | |
| JP | 2008-127632 | A | 05 June 2008 | (Family: none) | |
| CN | 106282512 | A | 04 January 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022052343 A
- JP 2012057219 A
- JP 2012012664 A
- JP 2012057218 A